# EUROPEAN PATENT APPLICATION

(11) **EP 4 528 697 A1**
(43) Date of publication of application: **26.03.2025**
(21) Application number: 23870397.9
(22) Date of filing: 15.09.2023
(51) Int. Cl.: G09F 9/30

(54) **FOLDING SCREEN DEVICE**

(30) Priority: 27.09.2022 CN 202211183546; 21.02.2023 CN 202310180076
(71) Applicant: Huawei Technologies Co., Ltd., Shenzhen, Guangdong 518129 (CN)
(72) Inventor: HUANG, Bo, Shenzhen, Guangdong 518129 (CN); ZHA, Peng, Shenzhen, Guangdong 518129 (CN); WANG, Yanxin, Shenzhen, Guangdong 518129 (CN); PANG, Dong, Shenzhen, Guangdong 518129 (CN); YU, Weidong, Shenzhen, Guangdong 518129 (CN)
(74) Representative: Maiwald GmbH
(86) International application number: PCT/CN2023/119094
(87) International publication number: WO 2024/067163

(57) **Abstract**

A foldable display device includes a first housing (100), a second housing (200), a third housing (300), a first hinge (400), a second hinge (500), and a flexible display (600), where two opposite ends of the first hinge (400) are respectively connected to the first housing (100) and the second housing (200), two opposite ends of the second hinge (500) are respectively connected to the second housing (200) and the third housing (300), and the flexible display (600) is connected to the first housing (100), the second housing (200), and the third housing (300). The first hinge (400) is capable of deforming for folding or unfolding of the first housing (100) relative to the second housing (200), and the second hinge (500) is capable of deforming for folding or unfolding of the second housing (200) relative to the third housing (300); and a thickness of the third housing (300) is greater than a thickness of the first housing (100) and/or a thickness of the second housing (200), and the thickness of the first housing (100) is different from the thickness of the second housing (200). A plurality of housings may be not equal in thickness, so that a thickness of the foldable display device in a folded state is reduced, and a weight of the foldable display device is smaller. In this way, a better holding feeling is provided for a user.

## Description

This application claims priority to Chinese Patent Application No. 202211183546.6, filed with the China National Intellectual Property Administration on September 27, 2022 and entitled "FOLDABLE ELECTRONIC DEVICE", and priority to Chinese Patent Application No. 202310180076.6, filed with the China National Intellectual Property Administration on February 21, 2023 and entitled "FOLDABLE DISPLAY DEVICE", which are incorporated herein by reference in their entireties.

### TECHNICAL FIELD

This application relates to the field of electronic device technologies, and in particular, to a foldable display device.

### BACKGROUND

With continuous development of display technologies, foldable display devices gradually become a development trend of future electronic products. However, the existing foldable display device still has some disadvantages.

In an aspect, in an unfolded state, an aspect ratio of the foldable display device cannot well adapt to many application scenarios (for example, playing a video, playing a game, reading an e-book, and reading a paper). For example, when a video is played, an aspect ratio of the video is generally 16:9 while the aspect ratio of the foldable display device is close to 1:1 in the unfolded state. Consequently, this leads to poor user experience.

In another aspect, the foldable display device is thick in a folded state, and consequently, a user has a poor hand holding feeling.

In conclusion, there is still room for further improvement of the existing foldable display device.

### SUMMARY

This application provides a foldable display device, to improve an existing foldable display device.

According to a first aspect, a foldable display device is provided, including a first housing, a second housing, a third housing, a first hinge, a second hinge, and a flexible display, where two opposite ends of the first hinge are respectively connected to the first housing and the second housing, two opposite ends of the second hinge are respectively connected to the second housing and the third housing, and the flexible display is connected to the first housing, the second housing, and the third housing; the first hinge is capable of deforming for folding or unfolding of the first housing relative to the second housing, and the second hinge is capable of deforming for folding or unfolding of the second housing relative to the third housing; and a thickness of the third housing is greater than a thickness of the first housing and/or a thickness of the second housing, and the thickness of the first housing is different from the thickness of the second housing.

In the conventional technology, a plurality of housings of the foldable display device are large in thickness, resulting in a poor hand feeling of the entire foldable display device. According to embodiments of this application, because the thickness of the third housing is greater than the thickness of the first housing and/or the thickness of the second housing, and the thickness of the first housing is different from the thickness of the second housing, that is, the plurality of housings may be unequal in thickness, the foldable display device may be thinner. This reduces a thickness of the foldable display device in a folded state, and reduces a weight of the foldable display device, thereby providing a user a better holding feeling.

In addition, because the foldable display device may be folded twice, an aspect ratio of the foldable display device in an unfolded state may better match a plurality of scenarios.

With reference to the first aspect, in some implementations of the first aspect, that a thickness of the third housing is greater than a thickness of the first housing and/or a thickness of the second housing, and the thickness of the first housing is different from the thickness of the second housing includes:
The thickness of the third housing is greater than the thickness of the second housing, and the thickness of the second housing is greater than the thickness of the first housing; or the thickness of the third housing is equal to the thickness of the second housing, and the thickness of the second housing is greater than the thickness of the first housing; or the thickness of the third housing is greater than the thickness of the second housing, and the thickness of the third housing is equal to the thickness of the first housing.

With reference to the first aspect, in some implementations of the first aspect, both the first housing and the third housing are wedge-shaped.

According to embodiments of this application, the first housing and the third housing are set to be wedge-shaped, so that the foldable display device has a better hand feeling.

With reference to the first aspect, in some implementations of the first aspect, a thickness of an end that is of the first housing and that is close to the first hinge is less than a thickness of an end that is of the first housing and that is away from the first hinge, and a thickness of an end that is of the third housing and that is close to the second hinge is less than a thickness of an end that is of the third housing and that is away from the second hinge.

With reference to the first aspect, in some implementations of the first aspect, a thickness of an end that is of the first housing and that is close to the first hinge is greater than a thickness of an end that is of the first housing and that is away from the first hinge, and a thickness of an end that is of the third housing and that is close to the second hinge is greater than a thickness of an end that is of the third housing and that is away from the second hinge.

With reference to the first aspect, in some implementations of the first aspect, the foldable display device includes at least one front-facing camera module; and the front-facing camera module is installed inside the first housing, and/or the second housing, and/or the third housing.

With reference to the first aspect, in some implementations of the first aspect, the first housing internally includes a first battery, the second housing internally includes a second battery, and the third housing internally includes a third battery, a mainboard, a rear-facing camera module, and a flexible printed board FPC of the flexible display.

According to embodiments of this application, a stacking manner of components inside the foldable display device is simple. In addition, the FPC of the flexible display and the mainboard are disposed in a same housing, so that the FPC of the flexible display can be prevented from passing through a shaft, and an internal structure of the foldable display device is further simplified.

With reference to the first aspect, in some implementations of the first aspect, the first housing internally includes a first speaker, and the third housing internally includes a second speaker.

According to embodiments of this application, stereo can be implemented by disposing a plurality of speakers.

With reference to the first aspect, in some implementations of the first aspect, a plurality of antennas are installed on a frame of the third housing, an upper frame of the second housing, and a lower frame of the second housing.

With reference to the first aspect, in some implementations of the first aspect, the first housing internally includes a first magnet, the second housing internally includes a second magnet and an electric apparatus, the third housing internally includes a third magnet, and the foldable display device further includes a switch; and the switch is configured to drive, via the electric apparatus, the second magnet to move, so that the first magnet and the second magnet repulse each other, and the second magnet and the third magnet repulse each other, to unfold the foldable display device from a folded state to a Z shape.

According to embodiments of this application, the magnet is disposed in the housing for electric unfolding of the foldable display device, thereby bringing better experience to the user.

With reference to the first aspect, in some implementations of the first aspect, the first hinge is an outward-foldable hinge, and the second hinge is an inward-foldable hinge; the flexible display includes a first flat part, a second flat part, and a third flat part, the first flat part is connected to the first housing, the second flat part is connected to the second housing, and the third flat part is connected to the third housing; and a thickness of the first flat part is greater than a thickness of the second flat part, and is greater than a thickness of the third flat part.

According to embodiments of this application, the flat parts of the flexible display may be different in thickness. For example, the thickness of the first flat part may be greater than the thickness of the second flat part and greater than the thickness of the third flat part, to improve performance of the first flat part in the folded state.

### BRIEF DESCRIPTION OF DRAWINGS

FIG. 1 shows a foldable display device according to this application;
FIG. 2 shows a form of a foldable display device;
FIG. 3 shows a plurality of support states of a foldable display device;
FIG. 4 shows a plurality of shapes of a flexible display in a folded state at an inward-foldable hinge;
FIG. 5 shows a thickness relationship between a plurality of components of a flexible display;
FIG. 6 shows a thickness relationship among a first housing, a second housing, and a third housing;
FIG. 7 shows a case in which a housing is wedge-shaped;
FIG. 8 shows a case in which a housing is wedge-shaped;
FIG. 9 shows an arrangement manner of a front-facing camera module of a foldable display device;
FIG. 10 shows a manner of using a front-facing camera module for (c) in FIG. 9;
FIG. 11 shows a protrusion part and a recessed part that are related to installation of a front-facing camera module;
FIG. 12 shows a partial internal structure of a foldable display device;
FIG. 13 shows a partial internal structure of a third housing;
FIG. 14(a) to FIG. 14(c) show a principle of electric unfolding;
FIG. 15 shows a manner of combining electric unfolding and manual unfolding of a foldable display device;
FIG. 16 shows a structure of a foldable display device in an unfolded state at an inward-foldable hinge; and
FIG. 17 shows a structure of a foldable display device in an unfolded state at an outward-foldable hinge.

### DESCRIPTION OF EMBODIMENTS

The following describes in detail implementations of this application. It may be understood that implementations described with reference to the accompanying drawings are examples, and are merely used to explain this application, but cannot be understood as a limitation on this application.

In the descriptions of this application, it should be understood that terms "first", "second", "third", and the like are merely used for description, and cannot be understood as an indication or implication of relative importance, or an implicit indication of a quantity of indicated technical features. In the descriptions of this application, "a plurality of" means two or more than two, unless otherwise specifically limited.

In the descriptions of this application, it should be noted that, unless otherwise expressly specified and limited, terms "install" and "connect" should be understood in a broad sense. For example, the terms may indicate a fixed connection, a detachable connection, or an integral connection, may indicate a mechanical connection or an electrical connection, or may indicate a direct interconnection, or an indirect interconnection through an intermediate medium. For a person of ordinary skill in the art, a specific meaning of the foregoing terms in this application may be understood according to a specific situation.

In the descriptions of this application, it should be understood that directions or position relationships indicated by the terms "up", "down", "front", "rear", "side", "inside", "outside", "horizontal", "vertical", and the like are directions or position relationships based on installing, and are merely intended to describe this application, but are not intended to indicate or imply that an apparatus or an element shall have a specific direction or be formed and operated in a specific direction, and therefore shall not be understood as a limitation on this application.

An embodiment of this application provides a foldable display device that can be folded for a plurality of times. The foldable display device may be any device having a communication and/or storage function, for example, may be an intelligent device like a mobile phone, a tablet computer, a watch, an e-reader, a notebook computer, an in-vehicle device, a web television, or a wearable device.

The following describes in detail a foldable display device provided in this application with reference to the accompanying drawings.

For ease of description, an example in which the foldable display device may be folded twice is used for description. In this case, the foldable display device can be folded into three layers.

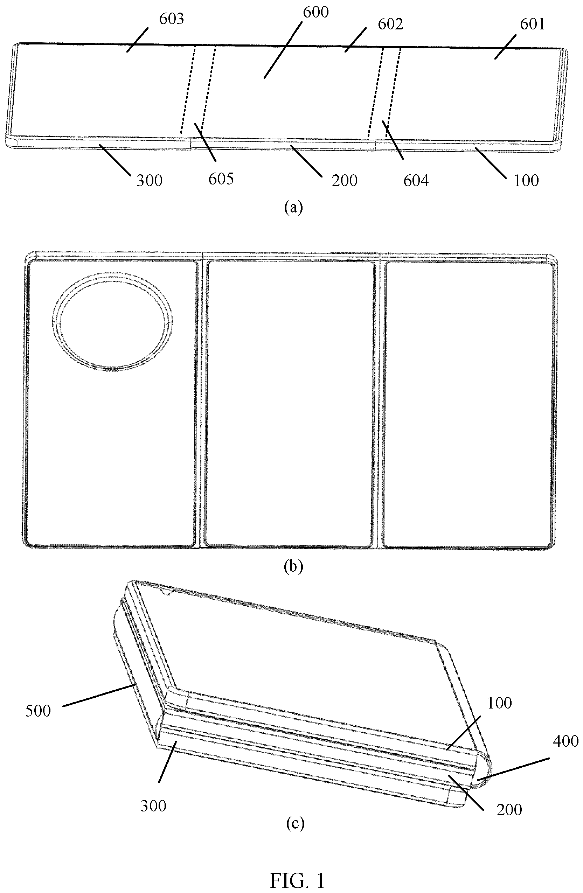

Specifically, as shown in FIG. 1, the foldable display device includes a first housing 100, a second housing 200, a third housing 300, a first hinge 400, a second hinge 500, and a flexible display 600. Two opposite ends of the first hinge 400 are respectively connected to the first housing 100 and the second housing 200, two opposite ends of the second hinge 500 are respectively connected to the second housing 200 and the third housing 300, and the flexible display 600 is connected to the first housing 100, the second housing 200, and the third housing 300.

The flexible display 600 may include a first flat part 601, a second flat part 602, a third flat part 603, a first bent part 604, and a second bent part 605. The first flat part 601 is connected to the first housing 100, the second flat part 602 is connected to the second housing 200, and the third flat part 603 is connected to the third housing 300.

The first hinge 400 is capable of deforming for folding or unfolding of the first housing 100 relative to the second housing 200, and the second hinge 500 is capable of deforming for folding or unfolding of the second housing 200 relative to the third housing 300.

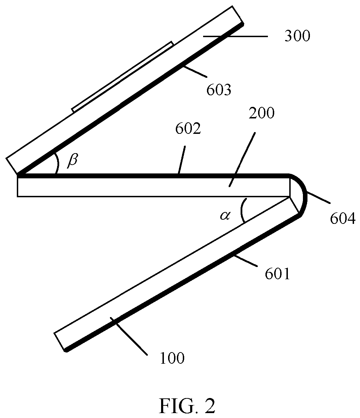

As shown in FIG. 2, an included angle between the first housing 100 and the second housing 200 may be denoted as α. If α ranges from 0° to 180°, the first housing 100 and the second housing 200 are in a folded state. In some implementations, when the first housing 100 and the second housing 200 are in the folded state, an included angle between the first housing 100 and the second housing 200 may also have a slight deviation relative to 0°, for example, may be 15° or 25°. If α ranges from 180° to 205°, the first housing 100 and the second housing 200 are in an unfolded state. In some implementations, when the first housing 100 and the second housing 200 are in the unfolded state, an included angle between the first housing 100 and the second housing 200 may also have a slight deviation relative to 180°, for example, may be 165°, 177°, or 185°. If the included angle between the first housing 100 and the second housing 200 is between an angle range in the folded state and an angle range in the unfolded state, the first housing 100 and the second housing 200 are not completely folded, or the first housing 100 and the second housing 200 are not completely unfolded, or the first housing 100 and the second housing 200 are in a transition state from the folded state to the unfolded state.

Similarly, an included angle between the second housing 200 and the third housing 300 may be denoted as β. If β ranges from 0° to 180°, the second housing 200 and the third housing 300 are in a folded state. In some implementations, when the second housing 200 and the third housing 300 are in the folded state, an included angle between the second housing 200 and the third housing 300 may also have a slight deviation relative to 0°, for example, may be 15° or 25°. If β ranges from 165° to 185°, the second housing 200 and the third housing 300 are in an unfolded state. In some implementations, when the second housing 200 and the third housing 300 are in the unfolded state, an included angle between the second housing 200 and the third housing 300 may also have a slight deviation relative to 180°, for example, may be 165°, 177°, or 185°. If the included angle between the second housing 200 and the third housing 300 is between an angle range in the folded state and an angle range in the unfolded state, the second housing 200 and the third housing 300 are not completely folded, or the second housing 200 and the third housing 300 are not completely unfolded, or the second housing 200 and the third housing 300 are in a transition state from the folded state to the unfolded state.

It may be understood that, for the foldable display device, if the first housing 100 and the second housing 200 are in the folded state, and the second housing 200 and the third housing 300 are in the folded state, the foldable display device is in a folded state. If the first housing 100 and the second housing 200 are in the unfolded state, and the second housing 200 and the third housing 300 are in the unfolded state, the foldable display device is in an unfolded state. If the foldable display device is between the folded state and the unfolded state, it may be considered that the foldable display device is not completely folded, or the foldable display device is not completely unfolded, or the foldable display device is in a transition state from the folded state to the unfolded state.

According to embodiments of this application, the foldable display device may be folded twice, so that an aspect ratio of the foldable display device in the unfolded state can better adapt to a plurality of application scenarios.

The following first describes a hinge of the foldable display device.

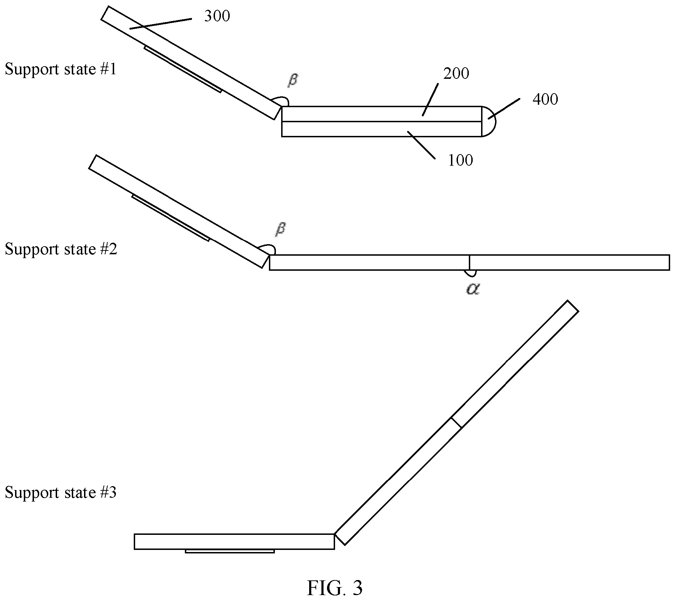

In an implementation, the first hinge 400 is an outward-foldable hinge, and the second hinge 500 is an inward-foldable hinge. In this implementation, as shown in FIG. 3, when the first housing 100 and the second housing 200 are in a folded state (for example, *α* = 0° ), and the second housing 200 and the third housing 300 are in a transition state (for example, *β* = 135° ) from the folded state to an unfolded state, a support state #1 may be formed.

Alternatively, when the first housing 100 and the second housing 200 are in an unfolded state (for example, *α* = 180° ), the second housing 200 and the third housing 300 are in a transition state (for example, *β* = 135° ) from the folded state to an unfolded state, and the first housing 100 and the second housing 200 are horizontally placed, a support state #2 may be formed.

Alternatively, when the first housing 100 and the second housing 200 are in an unfolded state (for example, *α* = 180° ), the second housing 200 and the third housing 300 are in a transition state (for example, *β* = 135° ) from the folded state to an unfolded state, and the third housing 300 is horizontally placed, a support state #3 may be formed.

It may be understood that a flexible display may be folded outward through the outward-foldable hinge, and is exposed after being folded. The flexible display may be folded inward through the inward-foldable hinge, and is hidden inside after being folded.

Specifically, as shown in FIG. 2, if the first housing 100 and the second housing 200 are connected through the outward-foldable hinge, and the second housing 200 and the third housing 300 are connected through the inward-foldable hinge, when the foldable display device is in the folded state, the first flat part 601 and the first bent part 604 of the flexible display 600 are exposed, and the second flat part 602 and the third flat part 603 of the flexible display 600 are hidden inside.

In another implementation, the first hinge 400 is an inward-foldable hinge, and the second hinge 500 is an outward-foldable hinge. Similarly, in this implementation, the foldable display device may also form a plurality of support states, which are not described herein again.

It may be understood that, according to a product requirement, the first hinge 400 and the second hinge 500 may have corresponding structures, to implement folding and unfolding of the flexible display 600.

For example, both the first hinge 400 and the second hinge 500 may be symmetrical hinges. For example, the first hinge 400 may be a symmetrical door plate outward-foldable hinge, and the second hinge 500 may be a symmetrical inward-foldable hinge.

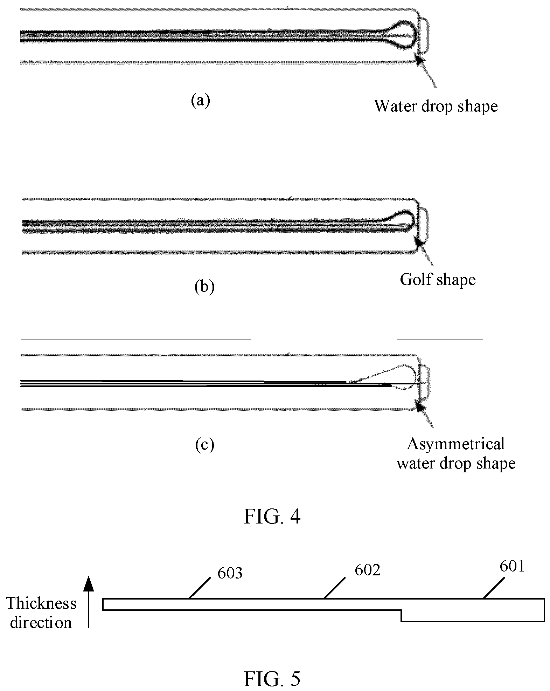

As shown in (a) in FIG. 4, for the symmetrical inward-foldable hinge, a shape of the flexible display 600 in the folded state may be a water-drop shape.

Optionally, the inward-foldable hinge may alternatively be a golf-type hinge. In this case, as shown in (b) in FIG. 4, a shape of the flexible display 600 in the folded state may be a golf shape.

Alternatively, optionally, the inward-foldable hinge may be an asymmetrical hinge. In this case, as shown in (c) in FIG. 4, the shape of the flexible display 600 in the folded state may be an asymmetrical water drop shape (or referred to as a bias water drop shape).

The following describes the flexible display of the foldable display device.

In embodiments of this application, the first housing 100, the second housing 200, and the third housing 300 may all be used as a carrier of the flexible display 600.

For ease of description, a normal direction of the flexible display 600 is used as a thickness direction.

In embodiments of this application, in an implementation, a thickness of the first flat part 601, a thickness of the second flat part 602, and a thickness of the third flat part 603 may be the same.

In another implementation, the flat parts of the flexible display 600 may be unequal in thickness. For example, the first hinge 400 is an outward-foldable hinge, and the second hinge 500 is an inward-foldable hinge. With reference to FIG. 2 and FIG. 5, because the first flat part 601 needs to be folded outward in the folded state, to improve performance of the first flat part 601 in the folded state, a thickness of the first flat part 601 may be greater than a thickness of the second flat part 602, and greater than a thickness of the third flat part 603. For example, a support layer may be added to a screen of the first flat part 601, to increase the thickness of the first flat part 601.

In addition, optionally, to improve anti-drop performance (namely, anti-fall performance) and reliability of the first bent part 604 in the folded state, a cushion layer may be added to a screen of the first bent part 604.

The following describes thicknesses of the first housing 100, the second housing 200, and the third housing 300.

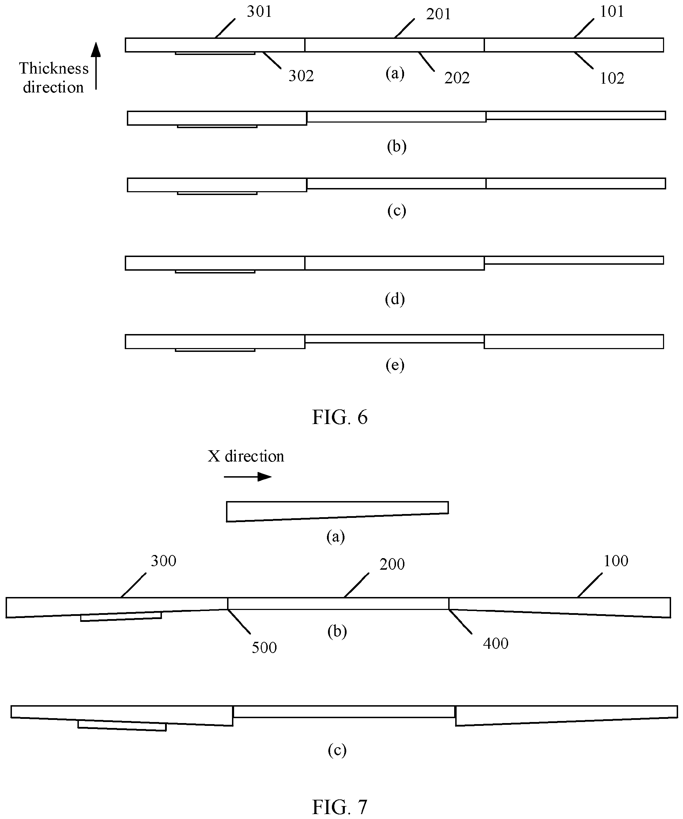

As shown in (a) in FIG. 6, the first housing 100 includes a first top surface 101 and a first back surface 102, and the first top surface 101 and the first back surface 102 are respectively located at two opposite ends in the thickness direction. In the thickness direction, a distance from a position on the first top surface 101 to a corresponding position on the first back surface 102 may be referred to as a thickness of the first housing 100 at the position.

Similarly, the second housing 200 includes a second top surface 201 and a second back surface 202, and the second top surface 201 and the second back surface 202 are respectively located at two opposite ends in the thickness direction. In the thickness direction, a distance from a position on the second top surface 201 to a corresponding position on the second back surface 202 may be referred to as a thickness of the second housing 200 at the position.

The third housing 300 includes a third top surface 301 and a third back surface 302, and the third top surface 301 and the third back surface 302 are respectively located at two opposite ends in the thickness direction. In the thickness direction, a distance from a position on the third top surface 301 to a corresponding position on the third back surface 302 may be referred to as a thickness of the third housing 300 at the position.

In embodiments of this application, the thickness of the third housing 300 is greater than the thickness of the first housing 100 and/or the thickness of the second housing 200. The thickness of the housing may be understood as a thickness of the housing as a whole, or an average thickness of the housing at all positions.

### Scenario 1:

For example, the first housing 100 has a same thickness in all positions, the second housing 200 has a same thickness in all positions, and the third housing 300 has a same thickness in all positions.

### Case 1:

As shown in (b) in FIG. 6, the thickness of the third housing 300 is greater than the thickness of the second housing 200, and the thickness of the second housing 200 is greater than the thickness of the first housing 100. In other words, the third housing 300, the second housing 200, and the first housing 100 may be in a thick-medium-thin thickness relationship.

In this case, the foldable display device may include two batteries, which are respectively disposed inside the second housing 200 and the third housing 300. Because no battery is disposed inside the first housing 100, the first housing 100 may be thinner, thereby reducing a thickness of the foldable display device in the folded state.

### Case 2:

As shown in (c) in FIG. 6, the thickness of the third housing 300 is greater than the thickness of the second housing 200, and the thickness of the second housing 200 is equal to the thickness of the first housing 100. In other words, the third housing 300, the second housing 200, and the first housing 100 may be in a thick-medium-medium thickness relationship.

In this case, the foldable display device may include three batteries, which are respectively disposed inside the three housings. Compared with case 1, in case 2, a battery is also disposed inside the first housing 100, so that a battery life of the foldable display device can be prolonged.

### Case 3:

As shown in (d) in FIG. 6, the thickness of the third housing 300 is equal to the thickness of the second housing 200, and the thickness of the second housing 200 is greater than the thickness of the first housing 100. In other words, the third housing 300, the second housing 200, and the first housing 100 may be in a thick-thick-thin thickness relationship.

In this case, the foldable display device may include two batteries, which are respectively disposed inside the second housing 200 and the third housing 300.

### Case 4:

As shown in (e) in FIG. 6, the thickness of the third housing 300 is greater than the thickness of the second housing 200, and the thickness of the third housing 300 is equal to the thickness of the first housing 100. In other words, the third housing 300, the second housing 200, and the first housing 100 may be in a thick-thin-thick thickness relationship.

In this case, the foldable display device may include two batteries, which are respectively disposed inside the first housing 100 and the third housing 300.

### Scenario 2:

At least one of the three housings is wedge-shaped. That the housing is wedge-shaped may be understood as follows: A thickness of the housing changes in an X direction.

In an implementation, as shown in (a) in FIG. 7, in the X direction, the thickness of the housing may gradually change continuously and smoothly. In this case, a change rate of the thickness may be basically constant. If coordinates of each position on the housing and a corresponding thickness are used as variables to construct a thickness curve, the thickness curve is an oblique straight line.

For example, the first housing 100 and the third housing 300 are wedge-shaped.

### Case 1:

As shown in (b) in FIG. 7, a thickness of an end that is of the first housing 100 and that is close to the first hinge 400 is less than a thickness of an end that is of the first housing 100 and that is away from the first hinge 400, and a thickness of an end that is of the third housing 300 and that is close to the second hinge 500 is less than a thickness of an end that is of the third housing 300 and that is away from the second hinge 500.

### Case 2:

As shown in (c) in FIG. 7, a thickness of an end that is of the first housing 100 and that is close to the first hinge 400 is greater than a thickness of an end that is of the first housing 100 and that is away from the first hinge 400, and a thickness of an end that is of the third housing 300 and that is close to the second hinge 500 is greater than a thickness of an end that is of the third housing 300 and that is away from the second hinge 500.

According to embodiments of this application, the first housing and the third housing are set to be wedge-shaped, so that the foldable display device has a better hand feeling. In addition, compared with that in (b) in FIG. 7, if the solution shown in (c) in FIG. 7 is used, a hand feeling of the foldable display device is further improved. In addition, a front-facing camera module may be disposed at a position away from a hinge, so that the front-facing camera module does not conflict with hinge space of the hinge.

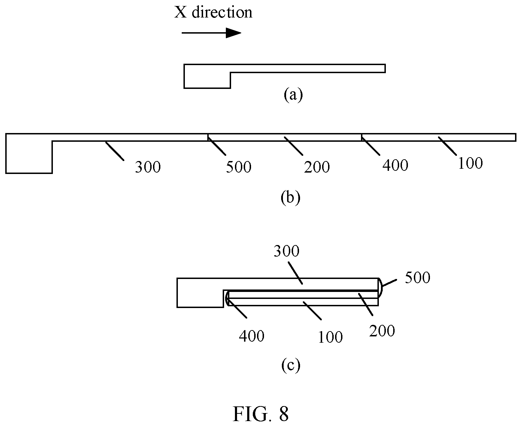

In another implementation, as shown in (a) in FIG. 8, in the X direction, the thickness of the housing may also change abruptly.

As shown in (b) and (c) in FIG. 8, it is assumed that the first hinge 400 is an inward-foldable hinge, the second hinge 500 is an outward-foldable hinge, and the thickness of the third housing 300 changes abruptly. One or more of a front-facing camera module, a rear-facing camera module, a battery, and a charging interface may be disposed in a thick area of the third housing 300, and a mainboard may be disposed in a thin area of the third housing 300.

The following describes the front-facing camera module of the foldable display device.

The foldable display device includes at least one front-facing camera module. The front-facing camera module is installed inside the first housing, and/or the second housing, and/or the third housing.

In other words, the front-facing camera module may be disposed on one or more of the first flat part 601, the second flat part 602, and the third flat part 603 of the flexible display 600.

The following describes several possible arrangement manners of the front-facing camera module of the foldable display device by using an example in which the first hinge 400 is an outward-foldable hinge, and the second hinge 500 is an inward-foldable hinge. A hole that is of the flexible display and that corresponds to the front-facing camera module may be in a circular shape, a square shape, or a capsule shape (also referred to as a pill shape or a runway shape). This is not limited in this application.

### Manner 1:

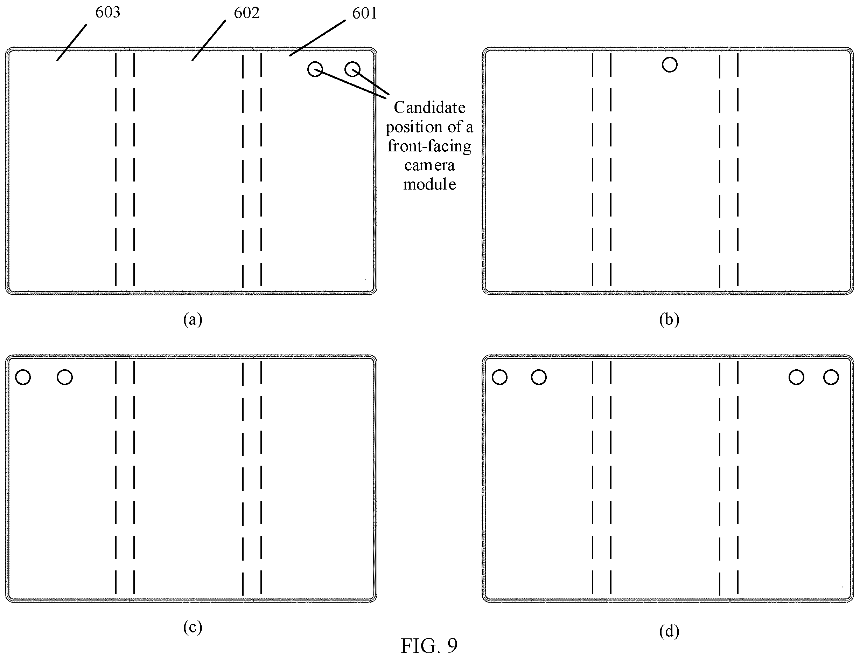

As shown in (a) in FIG. 9, the front-facing camera module may be disposed on the first flat part 601. In this case, the front-facing camera module may be used when the foldable display device is in a folded state; or the front-facing camera module may be used in the support state #3 shown in FIG. 3.

Specifically, the front-facing camera module may be disposed at any position of the first flat part 601. In an implementation, the front-facing camera module may be disposed at an upper-right corner of the first flat part 601 or at a middle position of an upper end, to avoid a conflict between the front-facing camera module and hinge space of the first hinge.

### Manner 2:

As shown in (b) in FIG. 9, the front-facing camera module may be disposed on the second flat part 602. In this case, the front-facing camera module may be used when the foldable display device is in an unfolded state.

Specifically, the front-facing camera module may be disposed at any position of the second flat part 602. In an implementation, the front-facing camera module may be disposed at a middle position of an upper end of the second flat part 602. In comparison with that the front-facing camera module is disposed at an upper-left corner or upper-right corner of the second flat part 602, in this application, the front-facing camera module is disposed at a position that is of the second flat part 602 and that is away from the first hinge and the second hinge, so that a conflict between the front-facing camera module, and the hinge space of the first hinge and the hinge space of the second hinge can be avoided.

### Manner 3:

As shown in (c) in FIG. 9, the front-facing camera module may be disposed on the third flat part 603. In this case, the front-facing camera module may be used in the support state #1 and the support state #2 shown in FIG. 3.

Specifically, the front-facing camera module may be disposed at any position of the third flat part 603. For example, the front-facing camera module may be disposed at an upper-left corner of the third flat part 603 or at a middle position of an upper end of the third flat part 603, to avoid a conflict between the front-facing camera module and the hinge space of the second hinge.

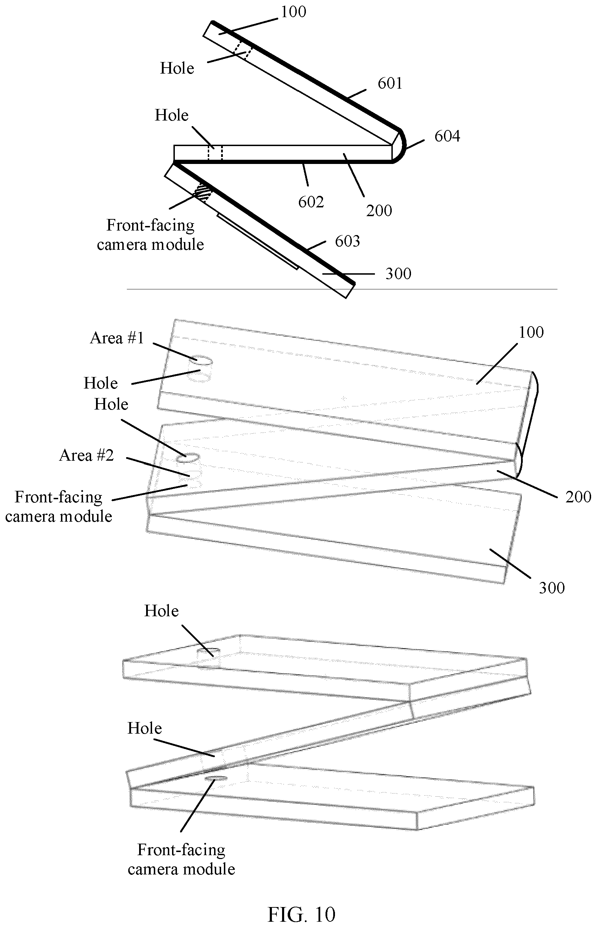

Optionally, for the manner 3, as shown in FIG. 10, holes may be provided on the first housing 100 and the second housing 200, to use the front-facing camera module in the case shown in (c) in FIG. 1. When the front-facing camera module disposed on the third flat part 603 needs to be used, a transmittance of an area #1 on the first flat part 601 and a transmittance of an area #2 on the second flat part 602 may be increased (for example, the area #1 and the area #2 are set to be transparent), so that light can pass through the first flat part 601 and the second flat part 602 to enter the front-facing camera module. When the front-facing camera module does not need to be used, display in the area #1 and the area #2 may be normal.

Specifically, the foldable display device may include a processing module. For example, when a user makes a video call or a user takes a selfie, a corresponding instruction (or an electrical signal) may be triggered, and the processing module may set the area #1 and the area #2 to be transparent based on the instruction.

For example, the flexible display 600 may be an organic light-emitting diode (organic light-emitting diode, OLED) display.

### Manner 4:

As shown in (d) in FIG. 9, the front-facing camera module may be disposed on the first flat part 601 and the third flat part 603. In an implementation, the front-facing camera module is disposed on an upper-right corner of the first flat part 601, and is disposed on an upper-left corner of the third flat part 603. Alternatively, in an implementation, the front-facing camera module is disposed in a middle part of an upper end of the first flat part 601, and is disposed in a middle part of an upper end of the third flat part 603, to implement a binocular vision function.

It may be understood that an arrangement manner of the front-facing camera module is not limited to the foregoing four manners. For example, the front-facing camera module may be alternatively arranged on the first flat part 601, the second flat part 602, and the third flat part 603.

In addition, optionally, it is considered that a size of a front-facing camera module of some models is large in a thickness direction, in a manner, a corresponding protrusion part may be disposed on a housing, to install the front-facing camera module. To reduce the thickness of the entire foldable display device, correspondingly, a recessed part may be disposed on another housing.

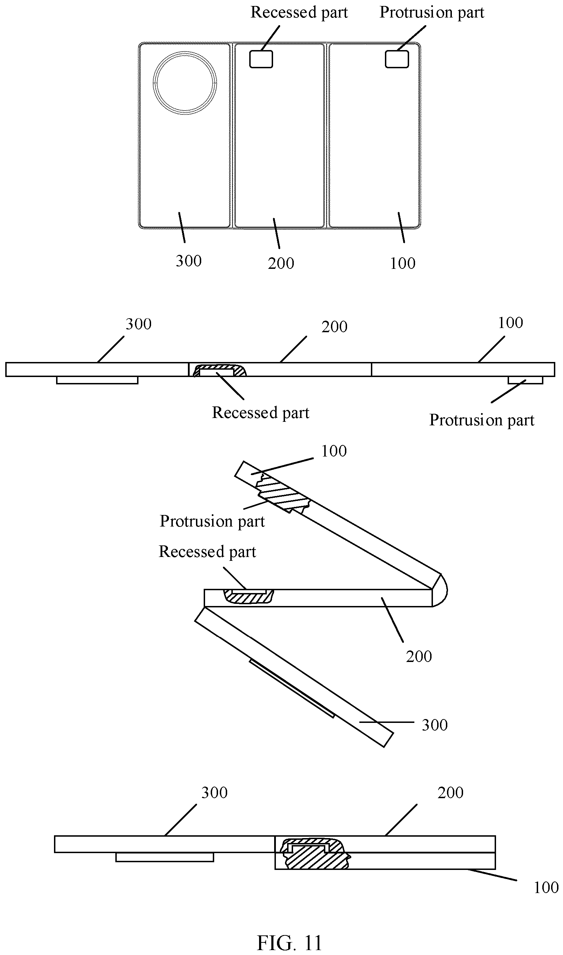

For example, as shown in FIG. 11, when the front-facing camera module is disposed on the first housing 100, and the first housing 100 is connected to the second housing 200 through an outward-foldable hinge, a protrusion part may be disposed on the first housing 100, and a recessed part may be disposed at a corresponding position of the second housing 200. It may be understood that, in a folded state, the protrusion part may be folded to the recessed part.

In another implementation, if the housing is set to be wedge-shaped, the front-facing camera module may be installed at a thick position of the housing.

For example, for the case shown in (b) in FIG. 7, when the front-facing camera module is installed on the first housing 100, the front-facing camera module may be installed on a side that is of the first housing 100 and that is away from the first hinge 400; or when the front-facing camera module is installed on the third housing 300, the front-facing camera module may be installed on a side that is of the third housing 300 and that is away from the second hinge 500.

For the case shown in (c) in FIG. 7, when the front-facing camera module is installed on the first housing 100, the front-facing camera module may be installed on a side that is of the first housing 100 and that is close to the first hinge 400; or when the front-facing camera module is installed on the third housing 300, the front-facing camera module may be installed on a side that is of the third housing 300 and that is close to the second hinge 500.

The following describes a partial internal structure of the foldable display device.

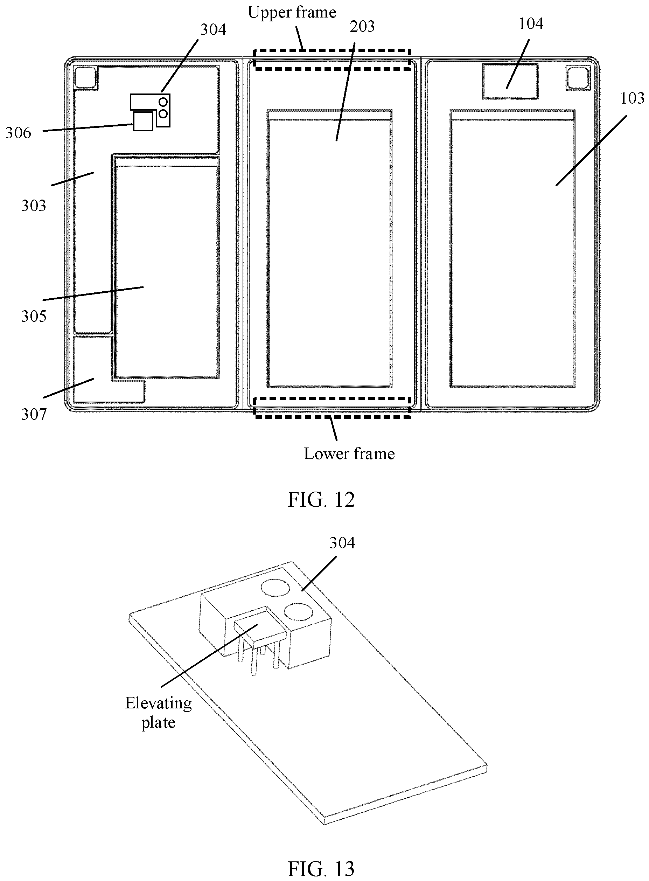

In an implementation, as shown in FIG. 12, both the mainboard 303 and the rear-facing camera module 304 are disposed inside the third housing 300. For example, the foldable display device includes three batteries. A first battery 103 is disposed inside the first housing 100, a second battery 203 is disposed inside the second housing 200, and a third battery 305 is disposed inside the third housing 300. A flexible printed board (flexible printed circuit, FPC) (not shown in FIG. 12) of the flexible display 600 may also be disposed inside the third housing 300.

It may be understood that appearance dimensions of the first battery 103, the second battery 203, and the third battery 305 are not limited in this application. The appearance dimensions of the three batteries may be the same or different. In a possible case, a thickness of the battery may match a thickness of the housing. That is, a larger thickness of the battery indicates a larger thickness of the housing correspondingly.

Optionally, the foldable display device may have only two batteries. Appearance dimensions of the two batteries may be the same or different.

Alternatively, the foldable display device may have only one battery, for example, only a battery is disposed inside the third housing 300.

It should be understood that, if the FPC of the flexible display 600 and the mainboard 303 are disposed in different housings, the FPC of the flexible display 600 needs to pass through a hinge (or need to pass through a shaft) when being connected to the mainboard 303. This increases complexity of an internal structure. Compared with the foregoing, in this embodiment of this application, both the FPC of the flexible display 600 and the mainboard 303 are disposed in the third housing 300, and the FPC of the flexible display 600 may be connected to the mainboard 303 in the third housing 300. This avoids passing through a shaft.

In this embodiment of this application, the mainboard 303 may be disposed in an L shape, and the mainboard 303 and the third battery 305 may be arranged left and right inside the third housing 300.

It may be understood that a system on chip (system on chip, SoC) chip 306 may be electrically connected to the mainboard 303. In an implementation, the SoC chip 306 is disposed at a position away from a frame of the third housing 300. In addition, the SoC chip 306 and the FPC of the flexible display 600 do not overlap in a thickness direction, so that a thickness of the foldable display device can be reduced, and impact of heat generated when the SoC chip 306 works on the flexible display 600 can also be reduced.

In an arrangement manner, as shown in FIG. 13, because the rear-facing camera module 304 is generally thick, an elevating plate may be disposed near the rear-facing camera module 304. The elevating plate is configured to install a SoC chip, and another component may be further installed in space under the elevating plate. This saves internal space.

In addition, the foldable display device may further include at least one speaker. When the foldable display device includes a plurality of speakers, stereo sound effect may be implemented.

For example, the foldable display device includes two speakers. As shown in FIG. 12, a first speaker 104 may be disposed inside the first housing 100, and a second speaker 307 may be disposed inside the third housing 300. The first speaker 104 and the second speaker 307 are respectively located at two opposite ends. For example, the first speaker 104 is located at an upper end of the first housing 100, and the second speaker 307 is located at a lower end of the third housing 300.

The first speaker 104 may be connected to the mainboard 303 in the third housing 300 through an FPC (not shown in FIG. 12). In this case, the FPC passes through the first hinge 400 and the second hinge 500.

The following describes an antenna layout of the foldable display device.

In this embodiment of this application, a plurality of gaps may be provided on a frame of the third housing 300, and the plurality of gaps are used to separate different antennas. For example, seven gaps may be provided on the frame of the third housing 300.

In addition, optionally, a gap may be further disposed on a frame of the first housing 100 and/or a frame of the second housing 200, to install an antenna. This further improves a communication capability of the foldable display device. It may be understood that, if antennas are installed on the frame of the first housing 100 and/or the frame of the second housing 200, when the antennas are electrically connected to the mainboard 303 in the third housing 300, the antennas need to pass through a hinge (or need to pass through a shaft).

It may be understood that, if an antenna is installed on the frame of the first housing 100, the antenna needs to pass through a shaft twice when being electrically connected to the mainboard 303 in the third housing 300; and if an antenna is installed on the frame of the second housing 200, the antenna needs to pass through a shaft once when being electrically connected to the mainboard 303 in the third housing 300. Therefore, to reduce a quantity of times of passing through a shaft, an antenna may be disposed on the frame of the second housing. For example, as shown in FIG. 12, antennas may be respectively disposed on an upper frame and a lower frame of the second housing 200.

The following describes how to unfold and fold the foldable display device.

### Manner 1:

A user can manually unfold or fold the foldable display device.

### Manner 2:

The foldable display device is unfolded by combining electric unfolding and manual unfolding. The foldable display device is folded by manual folding.

The electric unfolding is implemented based on a magnetic pole. Specifically, when magnetic poles that have opposite polarities and that are of two magnetic components face each other, the two magnetic components attract each other; and when magnetic poles that have same polarities and that are of two magnetic components face each other, the two magnetic components repulse each other.

It should be understood that the magnetic component in this application may be a magnetic component like an electromagnet or a permanent magnet.

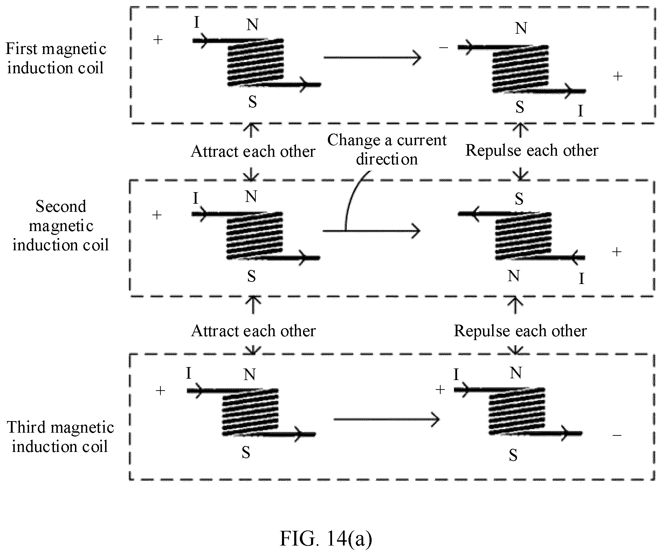

With reference to FIG. 14(a) to FIG. 14(c), the following describes in detail how to implement attraction and repulsion between housings by using a magnetic pole attraction principle in this embodiment of this application.
(1) Magnetic pole attraction based on a magnetic induction coil.

As shown in FIG. 14(a), three magnetic induction coils are included. Specifically, each magnetic induction coil includes two magnetic poles (a north (north, N) pole and a south (south, S) pole).

As shown on the left side of FIG. 14(a), a first magnetic induction coil and a second magnetic induction coil attract each other, and the second magnetic induction coil and a third magnetic induction coil attract each other. If the first magnetic induction coil is disposed in a first housing, the second magnetic induction coil is disposed in a second housing, and the third magnetic induction coil is disposed in a third housing, the first housing and the second housing attract each other, and the second housing and the third housing attract each other.

As shown on the right side of FIG. 14(a), the first magnetic induction coil and the second magnetic induction coil may repulse each other, and the second magnetic induction coil and the third magnetic induction coil may repulse each other by changing a current direction of the second magnetic induction coil. If the first magnetic induction coil is disposed in the first housing, the second magnetic induction coil is disposed in the second housing, and the third magnetic induction coil is disposed in the third housing, the first housing and the second housing repulse each other, and the second housing and the third housing repulse each other.

(2) Magnetic pole attraction based on a magnet and an electric mechanism.

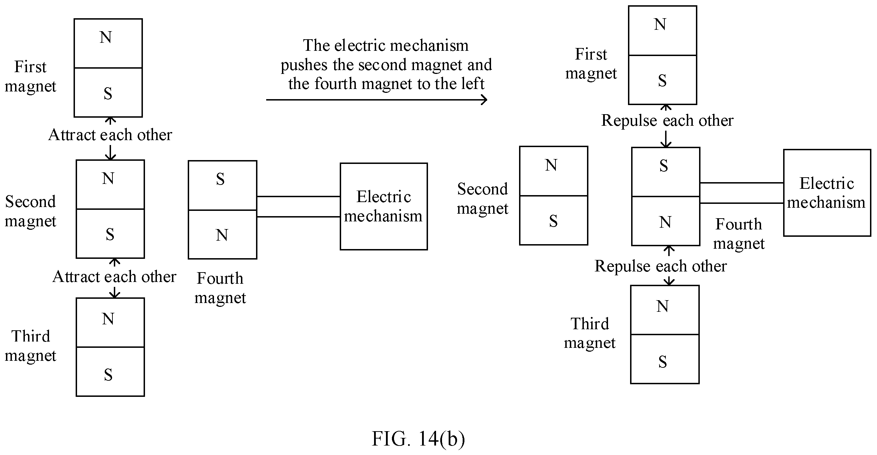

As shown in FIG. 14(b), three magnets are included. Specifically, each magnet includes two magnetic pole (an N pole and an S pole).

As shown on the left side of FIG. 14(b), a first magnet and a second magnet attract each other, and the second magnet and a third magnet attract each other. If the first magnet is disposed in a first housing, the second magnet and a fourth magnet are disposed in a second housing, and the third magnet is disposed in a third housing, the first housing and the second housing attract each other, and the second housing and the third housing attract each other.

As shown on the right side in FIG. 14(b), the second magnet and the fourth magnet are pushed through the electric mechanism, so that the first magnet and the fourth magnet repulse each other, and the fourth magnet and the third magnet repulse each other. If the first magnet is disposed in the first housing, the second magnet and the fourth magnet are disposed in the second housing, and the third magnet is disposed in the third housing, the first housing and the second housing repulse each other, and the second housing and the third housing repulse each other.

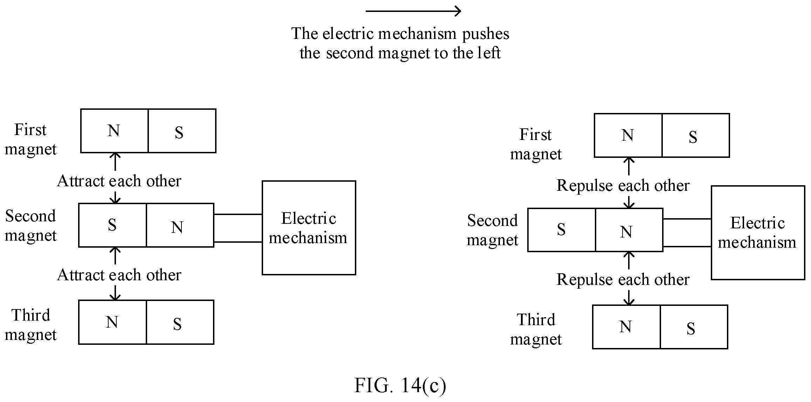

As shown in FIG. 14(c), three magnets are included. Specifically, each magnet includes two magnetic pole (an N pole and an S pole).

As shown on the left side of FIG. 14(c), a first magnet and a second magnet attract each other, and the second magnet and a third magnet attract each other. If the first magnet is disposed in a first housing, the second magnet is disposed in a second housing, and the third magnet is disposed in a third housing, the first housing and the second housing attract each other, and the second housing and the third housing attract each other.

As shown on the right side in FIG. 14(c), the second magnet is pushed through the electric mechanism, so that the first magnet and the second magnet repulse each other, and the second magnet and the third magnet repulse each other. If the first magnet is disposed in the first housing, the second magnet is disposed in the second housing, and the third magnet is disposed in the third housing, the first housing and the second housing repulse each other, and the second housing and the third housing repulse each other.

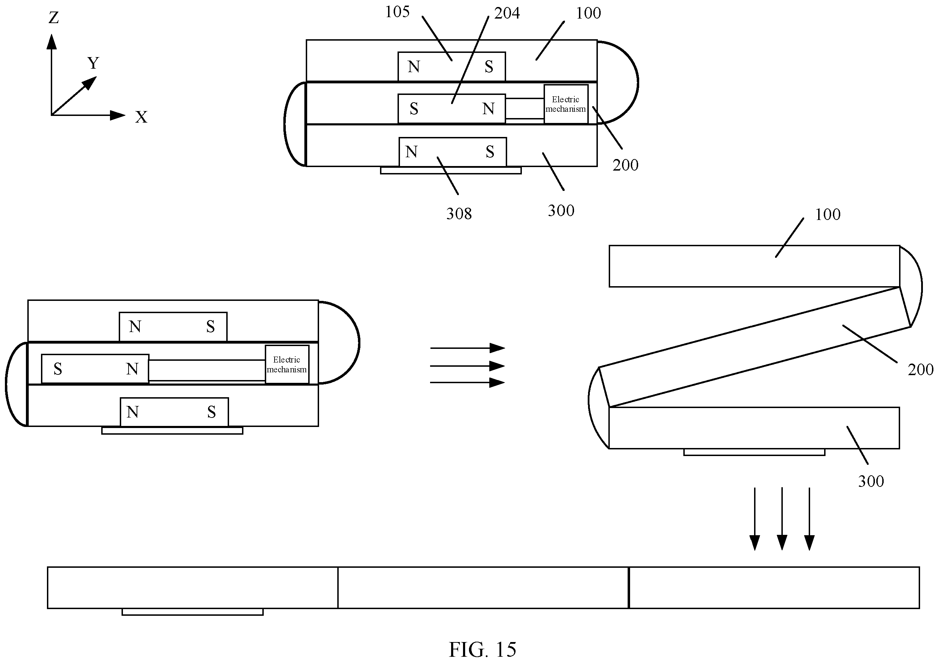

Based on the principle shown in FIG. 14(c), as shown in FIG. 15, a first magnet 105 is disposed in the first housing 100, a second magnet 204 is disposed in the second housing 200, and a third magnet 308 is disposed in the third housing 300. In addition, a switch (not shown in FIG. 15) is disposed on the foldable display device. A position of the first magnet 105 in the first housing 100 is fixed, and a position of the third magnet 308 in the third housing 300 is also fixed. The second magnet 104 is connected to the electric mechanism. For example, the electric mechanism may alternatively be disposed in the second housing 200. The switch is configured to adjust a position of the second magnet 204 in the second housing 200 through the electric mechanism, in other words, the position of the second magnet 204 in the second housing 200 may be changed. For example, when connection lines between the N poles and the S poles of the three magnets are all parallel to an X direction, the second magnet 204 may move in the X direction. For another example, when the connection lines between the N poles and the S poles of the three magnets are all parallel to a Y direction, the second magnet 204 may move in the Y direction. This example is not shown in FIG. 15.

In a folded state, the first magnet 105 and the second magnet 204 attract each other, and the second magnet 204 and the third magnet 308 attract each other.

As shown in FIG. 15, the user may control the electric mechanism through the switch, so that the electric mechanism drives the second magnet 204 to move for staggering the second magnet 204 from the first magnet 105 and the third magnet 308. After the staggering, the N pole of the first magnet is opposite to the N pole of the second magnet, and the N pole of the second magnet is opposite to the N pole of the third magnet; or the S pole of the first magnet is opposite to the S pole of the second magnet, and the S pole of the second magnet is opposite to the S pole of the third magnet, so that the foldable display device is unfolded into a Z shape by using mutually-repulsive magnetic forces between the magnets. Further, the user manually unfolds the foldable display device.

For example, the switch may be a physical switch or a virtual switch. For example, if a physical switch is disposed on the third housing 300, the user can unfold the foldable display device into a Z shape through the physical switch. Alternatively, a virtual switch may be disposed in an outward-foldable hinge area, and the user may slide the outward-foldable hinge area by using a finger, to unfold the foldable display device into a Z shape.

In a possible implementation, when the foldable display device needs to be unfolded into a Z shape, the user may trigger an electrical signal through the switch, and the electrical signal may be transmitted to an electric apparatus through the processor, so that the electric apparatus may start to work based on the electrical signal, thereby driving the second magnet 204 to move.

It may be understood that better experience may be provided for the user by combining electric unfolding with manual unfolding.

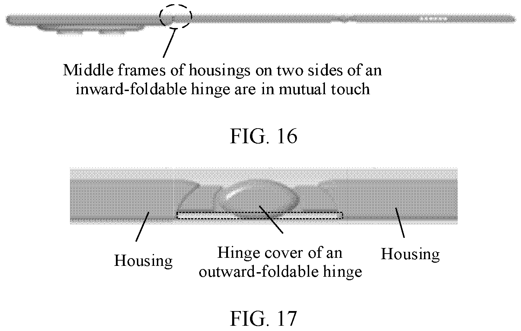

In addition, in an unfolded state, as shown in FIG. 16, middle frames of two housings on two sides of an inward-foldable hinge may be designed in a mutual touch manner. As shown in FIG. 17, a hinge cover of an outward-foldable hinge and two housings on the two sides of the outward-foldable hinge may be designed in a flush manner, so that the foldable display device is more beautiful and has a better hand feeling in the unfolded state.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable display device, comprising a first housing, a second housing, a third housing, a first hinge, a second hinge, and a flexible display, wherein
two opposite ends of the first hinge are respectively connected to the first housing and the second housing, two opposite ends of the second hinge are respectively connected to the second housing and the third housing, and the flexible display is connected to the first housing, the second housing, and the third housing;
the first hinge is capable of deforming for folding or unfolding of the first housing relative to the second housing, and the second hinge is capable of deforming for folding or unfolding of the second housing relative to the third housing; and
a thickness of the third housing is greater than a thickness of the first housing and/or a thickness of the second housing, and the thickness of the first housing is different from the thickness of the second housing.

2. The foldable display device according to claim **1,** wherein that a thickness of the third housing is greater than a thickness of the first housing and/or a thickness of the second housing, and the thickness of the first housing is different from the thickness of the second housing comprises:
the thickness of the third housing is greater than the thickness of the second housing, and the thickness of the second housing is greater than the thickness of the first housing; or
the thickness of the third housing is equal to the thickness of the second housing, and the thickness of the second housing is greater than the thickness of the first housing; or
the thickness of the third housing is greater than the thickness of the second housing, and the thickness of the third housing is equal to the thickness of the first housing.

3. The foldable display device according to claim 1, wherein both the first housing and the third housing are wedge-shaped.

4. The foldable display device according to claim 3, wherein a thickness of an end that is of the first housing and that is close to the first hinge is less than a thickness of an end that is of the first housing and that is away from the first hinge, and a thickness of an end that is of the third housing and that is close to the second hinge is less than a thickness of an end that is of the third housing and that is away from the second hinge.

5. The foldable display device according to claim 3, wherein a thickness of an end that is of the first housing and that is close to the first hinge is greater than a thickness of an end that is of the first housing and that is away from the first hinge, and a thickness of an end that is of the third housing and that is close to the second hinge is greater than a thickness of an end that is of the third housing and that is away from the second hinge.

6. The foldable display device according to any one of claims 1 to 5, wherein the foldable display device comprises at least one front-facing camera module; and
the front-facing camera module is installed inside the first housing, and/or the second housing, and/or the third housing.

7. The foldable display device according to any one of claims 1 to 6, wherein the first housing internally comprises a first battery, the second housing internally comprises a second battery, and the third housing internally comprises a third battery, a mainboard, a rear-facing camera module, and a flexible printed board FPC of the flexible display.

8. The foldable display device according to any one of claims 1 to 7, wherein the first housing internally comprises a first speaker, and the third housing internally comprises a second speaker.

9. The foldable display device according to any one of claims 1 to 8, wherein a plurality of antennas are installed on a frame of the third housing, an upper frame of the second housing, and a lower frame of the second housing.

10. The foldable display device according to any one of claims 1 to 9, wherein the first housing internally comprises a first magnet, the second housing internally comprises a second magnet and an electric apparatus, the third housing internally comprises a third magnet, and the foldable display device further comprises a switch; and
the switch is configured to drive, via the electric apparatus, the second magnet to move, so that the first magnet and the second magnet repulse each other, and the second magnet and the third magnet repulse each other, to unfold the foldable display device from a folded state to a Z shape.

11. The foldable display device according to any one of claims 1 to 9, wherein the first hinge is an outward-foldable hinge, and the second hinge is an inward-foldable hinge;
the flexible display comprises a first flat part, a second flat part, and a third flat part, the first flat part is connected to the first housing, the second flat part is connected to the second housing, and the third flat part is connected to the third housing; and
a thickness of the first flat part is greater than a thickness of the second flat part, and is greater than a thickness of the third flat part.
